# EUROPEAN PATENT APPLICATION

(11) **EP 2 256 151 A1**
(43) Date of publication of application: **01.12.2010**
(21) Application number: 09722114.7
(22) Date of filing: 26.02.2009
(51) Int. Cl.: C08J 7/04, B32B 27/40, C09D 5/00, C09D 175/14

(54) **READILY BONDABLE POLYESTER FILM**

(30) Priority: 17.03.2008 JP 2008067694
(71) Applicant: Mitsubishi Plastics, Inc., Tokyo 103-0021 (JP)
(72) Inventor: KODA, Toshihiro, Maibara-shi Shiga-ken 521-0234 (JP); FUJITA, Masato, Maibara-shi Shiga-ken 521-0234 (JP)
(74) Representative: Hollatz, Christian
(86) International application number: PCT/JP2009/000848
(87) International publication number: WO 2009/116231

(57) **Abstract**

The present invention provides a polyester film which is excellent in easy-adhesive property to a topcoat agent, in particular, excellent in adhesion between a coating layer, a topcoat layer and a polyester base film even when the topcoat layer is formed of a solvent-free active energy radiation-curing resin. The present invention relates to an easy-adhesive polyester film comprising a polyester film and a coating layer formed on one surface of the polyester film which is obtained by applying a coating solution comprising a vinyl group-containing polyurethane resin thereonto.

## Description

### TECHNICAL FIELD

The present invention relates to a polyester film which is provided thereon with a coating layer having an excellent adhesion property to various kinds of topcoat agents, more particularly, to a polyester film which is excellent in adhesion between an active energy radiation-cured resin layer and a base material which are formed through a coating layer.

### BACKGROUND ART

Biaxially stretched polyester films have been used in the applications including not only packaging materials, printing plate-making materials, displaying materials, transfer materials and window-attaching materials but also anti-reflective films used in membrane switches and flat displays, optical films such as diffusion sheets and prism sheets, and transparent touch panels, because they are excellent in transparency, dimensional stability, mechanical properties, heat resistance, electrical properties, gas-barrier property, chemical resistance and the like. In the case where the polyester films are used in the above applications, it is required to impart functions such as scratch resistance, anti-fouling property and anti-glare property thereto. For this purpose, there has been used the method in which a curing coating material is applied onto a surface of the polyester film to form a cured layer thereon and thereby obtain a laminated film.

Typical examples of the curing coating material include acrylic resins, urethane-based resins, amino-based resins, alkyd-based resins and silicone-based resins. These resins exhibit their properties by undergoing a crosslinking reaction when heated or irradiated with an active energy radiation such as ultraviolet rays or electron beams and thereby increasing a hardness of a coating layer formed therefrom. The heat-curable resins which are cured by heating may require a high crosslinking temperature in many cases and also need a prolonged reaction time when subjected to the crosslinking reaction, so that there tends to arise such a problem that the resulting polyester films suffer from dimensional change, poor surface flatness, low transparency, etc. To solve these problems, active energy radiation-crosslinking type surface curing coating materials have been noticed. However, the polyester films tend to be deteriorated in adhesion to such an active energy radiation-cured layer.

In particular, in recent years, so-called solvent-free coating materials have been increasingly used as such a curable coating material. However, the solvent-free coating materials tend to be deteriorated in effects of penetration and swelling against an easy-adhesive layer and also insufficient in adhesion thereto as compared to coating materials which are diluted with a solvent.

As one of the methods for improving an adhesion property of biaxially stretched polyester films, there is known the method in which various resins are applied onto a surface of the polyester film to form a coating layer having an easy-adhesive property thereon.

For example, in Patent Documents 1 to 3 and the like, it is described that polyester resins, acrylic resins, polyurethane resins or specific crosslinking agents, etc., are used for the above purpose.

Also, in Patent Document 4, it is described that a coating layer comprising a polyurethane having a double bond in a urethane main chain thereof is provided to improve an adhesion property of the polyester film by using the urethane having an unsaturated double bond.

However, these conventional easy-adhesive coating layers tend to be still unsatisfactory in their bonding property depending upon kinds of topcoat layers formed thereon. As described above, the coating layers tend to be insufficient in adhesion to an active energy radiation-cured resin layer, in particular, solvent-free type coating materials in many cases.

Patent Document 1: Japanese Patent Application Laid-Open (KOKAI) No. 8-281890
Patent Document 2: Japanese Patent Application Laid-Open (KOKAI) No. 11-286092
Patent Document 3: Japanese Patent Application Laid-Open (KOKAI) No. 2000-229395
Patent Document 4: Japanese Patent Application Laid-Open (KOKAI) No. 1-218832

### DISCLOSURE OF THE INVENTION

### Problems to be Solved by the Invention

The present invention has been accomplished to solve the above problems. An object of the present invention is to provide a polyester film which is excellent in easy-adhesive property to a topcoat agent, in particular, even when the topcoat agent is formed of a solvent-free active energy radiation-curing resin.

### Means for Solving Problems

As a result of the present inventors' earnest study, it has been found that the above problems can be solved by providing a coating layer formed of a specific kind of compound on the polyester film. The present invention has been attained on the basis of this finding.

That is, according to the present invention, there is provided an easy-adhesive polyester film comprising a polyester film and a coating layer formed on one surface of the polyester film which is obtained by applying a coating solution comprising a vinyl group-containing polyurethane resin thereonto.

### EFFECT OF THE INVENTION

In accordance with the present invention, there is provided a polyester film which is excellent in easy-adhesive property to a coating agent, in particular, excellent in adhesion between a coating layer, a topcoat layer and a polyester base film even when the topcoat layer is formed of a solvent-free active energy radiation-curing resin. Therefore, the present invention has a very high industrial value.

### PREFERRED EMBODIMENTS FOR CARRYING OUT THE INVENTION

The present invention is described in detail below.
The base film used in the coated film of the present invention is formed of a polyester. As the polyester, there may be used those polyesters produced by melt-polycondensing a dicarboxylic acid such as terephthalic acid, isophthalic acid, 2,6-naphthalenedicarboxylic acid, adipic acid, sebacic acid, 4,4'-diphenyldicarboxylic acid and 1,4-cyclohexyldicarboxylic acid or an ester of these acids with a glycol such as ethylene glycol, diethylene glycol, triethylene glycol, propylene glycol, 1,4-butanediol, neopentyl glycol and 1,4-cyclohexane dimethanol. The polyesters formed of these acid and glycol components may be produced by optionally using ordinary methods. For example, there may be adopted such a method in which a lower alkyl ester of an aromatic dicarboxylic acid and a glycol are subjected to transesterification reaction, or the aromatic dicarboxylic acid and the glycol are directly subjected to esterification reaction, to substantially form a bis-glycol ester of the aromatic dicarboxylic acid or an oligomer thereof, and then the obtained ester or oligomer is subjected to polycondensation by heating under reduced pressure. According to the aimed applications, an aliphatic dicarboxylic acid may also be copolymerized with the above components.

Typical examples of the polyester used in the present invention include polyethylene terephthalate, polyethylene 2,6-naphthalate and poly-1,4-cyclohexane dimethylene terephthalate, as well as those polyesters obtained by copolymerizing the above acid component or the above glycol component therewith. These polyesters may comprise other components or additives, if required.

The polyester film of the present invention may also comprises particles for the purposes of ensuring a good traveling property of the resulting film and preventing occurrence of flaws thereon, etc. Examples of the particles include inorganic particles such as silica, calcium carbonate, magnesium carbonate, calcium phosphate, kaolin, talc, aluminum oxide, titanium oxide, alumina, barium sulfate, calcium fluoride, lithium fluoride, zeolite and molybdenum sulfide; and organic particles such as crosslinked polymer particles and calcium oxalate. In addition, as the particles, there may also be used deposited particles obtained during the process for production of the polyester, etc.

The particle diameter and content of the particles used in the polyester film may be selected and determined according to the aimed applications and objects of the resulting film. The average particle diameter of the particles is usually in the range of 0.01 to 5.0 µm. When the average particle diameter of the particles is more than 5.0 µm, the resulting film tends to exhibit an excessively high surface roughness, or the particles tend to be fallen off from the surface of the film. When the average particle diameter of the particles is less than 0.01 µm, the surface roughness of the resulting film tends to be too low, thereby sometimes failing to attain a sufficient easy-slip property of the film. The content of the particles in the polyester film is usually in the range of 0.0003 to 1.0% by weight and preferably 0.0005 to 0.5% by weight based on the weight of the polyester. When the content of the particles is less than 0.0003% by weight, the resulting film tends to be insufficient in easy-slip property. On the other hand, when the content of the particles added is more than 1.0% by weight, the resulting film tends to be insufficient in transparency. In particular, in the case where the obtained film should ensure a good transparency, a good surface smoothness or the like, substantially no particles may be incorporated in the polyester. In addition, various stabilizers, lubricants, antistatic agents, etc., may be appropriately added to the polyester film.

As the method of forming the film of the present invention, there may be used any of ordinary known film-forming methods, and the method is therefore not particularly limited. For example, a sheet obtained by melt-extrusion of the polyester is stretched in one direction thereof at a temperature of 70 to 145°C at a stretch ratio of 2 to 6 times by a roll stretching method to obtain a monoaxially stretched film. Next, the thus obtained monoaxially stretched film is stretched within a tenter in the direction perpendicular to the previous stretching direction at a temperature of 80 to 160°C at a stretch ratio of 2 to 6 times and then heat-treated at a temperature of 150 to 250°C for 1 to 600 sec to obtain the aimed film. Further, upon the heat treatment, in the heat-treating zone and/or a cooling zone located at an outlet of the heat-treating zone, the resulting film is preferably subjected to relaxation by 0.1 to 20% in a longitudinal direction and/or a lateral direction thereof.

The polyester film of the present invention may have either a single layer structure or a multi-layer structure. In the polyester film having a multi-layer structure, polyesters used for a surface layer and an inner layer, for both the surface layers or for the respective layers may be different from each other according to the aimed applications and objects thereof.

The polyester film of the present invention is provided on at least one surface thereof with an easy-adhesive coating layer. In addition, the polyester film may also be provided on its opposed surface with a similar or other coating layer or a functional layer. As a matter of course, these polyester films are also involved in the scope of the present invention.

Next, the easy-adhesive coating layer provided on the film according to the present invention is described.
In the present invention, it is required that the coating layer comprises a vinyl group-containing polyurethane resin. The vinyl group-containing polyurethane resin as used herein means a resin comprising a vinyl group in a part of a known polyurethane resin which comprises a polyol and a polyisocyanate as main constitutional components thereof.

Examples of the polyisocyanate component of the vinyl group-containing polyurethane used in the present invention include tolylene diisocyanate, phenylene diisocyanate, 4,4'-diphenylmethane diisocyanate, hexamethylene diisocyanate, xylylene diisocyanate, 4,4'-dicyclohexylmethane diisocyanate and isophorone diisocyanate.

Examples of the polyol component include polyethers such as polyoxyethylene glycol, polyoxypropylene glycol and polyoxytetramethylene glycol; polyesters such as polyethylene adipate, polyethylene-butylene adipate and polycaprolactone; acrylic polyols; carbonate-based polyols; and castor oil. In general, the number-average molecular weight of the polyol component is preferably 300 to 5000 as measured by gel permeation chromatography (GPC) in terms of polystyrene.

In the present invention, in particular, the polyurethane obtained using the carbonate-based polyol has a high adhesion improving effect. The polycarbonate polyols may be obtained, for example, by the reaction between a diphenyl carbonate and a diol, the reaction between a dialkyl carbonate and a diol, or the reaction between an alkylene carbonate and a diol. Examples of the diol include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexane dimethanol, 1,7-heptanediol, 1,8-octanediol, 1,9-nonanediol, 1,10-decanediol, neopentyl glycol, 3-methyl-1,5-pentanediol and 3,3-dimethylol heptane.

Examples of a chain extender or a crosslinking agent usable in the present invention include ethylene glycol, propylene glycol, butanediol, diethylene glycol, trimethylol propane, hydrazine, ethylenediamine, diethylenetriamine, isophorone diamine, 4,4'-diaminodiphenylmethane, 4,4'-diaminodicyclohexylmethane and water.

As the method of introducing a vinyl group into the polyurethane resin, there may be used various methods which can be carried out in respective stages of the polymerization reaction. For example, there may be mentioned the method in which a vinyl group-containing resin is used as a comonomer component upon synthesis of a prepolymer, or the method in which a vinyl group-containing diol, diamine or amino alcohol, etc., is used in the respective stages of the polymerization reaction. More specifically, for example, a vinyl-etherified compound such as 2-hydroxyethyl vinyl ether, diethylene glycol monovinyl ether and 4-hydroxybutyl vinyl ether may be previously copolymerized with a part of the respective components.

The content of the vinyl group in the polyurethane is usually not less than 1 mol and preferably not less than 5 mol based on 100 mol of a urethane bond of the polyurethane. When the content of the vinyl group is less than 1 mol, the polyurethane tends to exhibit a poor adhesion improving effect. On the other hand, the upper limit of the content of the vinyl group in the polyurethane is not particularly limited. However, even when the content of the vinyl group is excessively large, the adhesion improving effect tends to be no longer enhanced, and rather the resulting polyurethane resin tends to cause deterioration in mechanical properties. For this reason, the upper limit of the content of the vinyl group in the polyurethane is preferably not more than 50 mol and more preferably not more than 25 mol.

The medium for dispersing or dissolving the vinyl group-containing polyurethane as used in the present invention may be a solvent, but is preferably water. In order to disperse or dissolve the polyurethane in water, there may be used those polyurethanes of a forcibly emulsifiable type which can be dispersed and dissolved using an emulsifier, or those polyurethanes of a self-emulsifiable type or a water-soluble type which are obtained by introducing a hydrophilic group into polyurethane resins, etc. Among these polyurethanes, in particular, self-emulsifiable type polyurethanes which are ionomerized by introducing an ion group into a skeleton of polyurethane resins are preferred because they are excellent in storage stability of the coating solution as well as water resistance, transparency and adhesion property of the resulting coating layer. Examples of the ion group to be introduced include various groups such as a carboxyl group, a sulfonic acid group, a phosphoric acid group, a phosphonic acid group and a quaternary ammonium group. Among these ion groups, preferred is a carboxyl group. As the method of introducing a carboxyl group into the urethane resin, there may be used various methods which are carried out in respective stages of the polymerization reaction. For example, there may be used the method in which a carboxyl group-containing resin is used as a comonomer component upon synthesis of a prepolymer, or the method in which a carboxyl group-containing component is used as one component of a polyol, a polyisocyanate, a chain extender and the like. In particular, there is preferably used the method in which a carboxyl group-containing diol is used to introduce a desired amount of the carboxyl group by suitably adjusting an amount of the diol charged. For example, the diol used in the polymerization for production of the urethane resin may be copolymerized with dimethylolpropionic acid, dimethylolbutanoic acid, bis-(2-hydroxyethyl)propionic acid, bis-(2-hydroxyethyl)butanoic acid, etc. In addition, the carboxyl group is preferably formed into a salt thereof by neutralizing it with ammonia, amines, alkali metals, inorganic alkalis, etc. Among these compounds used for the neutralization, especially preferred are ammonia, trimethylamine and triethylamine. When using such a polyurethane resin, the carboxyl group thereof from which the neutralizing agent is removed in the drying step after the coating may be used as a crosslinking reaction site which can be reacted with other crosslinking agents.

In the applications of easy-adhesive films, after forming a topcoat layer thereon, the resulting film tends to be used under high-temperature and high-humidity conditions for a long period of time in some cases. For this reason, the easy-adhesive film may be required to have a durable adhesion property under the above conditions. By using the above-described method, the coating solution before being coated is excellent in stability, and the resulting coating layer can be improved in durability, etc.

In addition, ordinary polyurethane resins tend to be deteriorated in adhesion property when a carboxyl group therein is reacted with a crosslinking agent. On the other hand, the vinyl group-containing polyurethane resin used in the present invention tends to hardly suffer from the deterioration.

Examples of the crosslinking agent ordinarily used include amino resin-based crosslinking agents such as melamine and benzoguanamine, oxazoline-based crosslinking agents, carbodiimide-based crosslinking agents, epoxy-based crosslinking agents and isocyanate-based crosslinking agents. Among these crosslinking agents, especially preferred are those crosslinking agents which can be reacted with a carboxyl group. In addition, there may also be used so-called polymer-type crosslinking agents obtained by copolymerizing the above crosslinkable functional groups into a skeleton of the other polymers. Further, a plurality of crosslinking agents selected from the above crosslinking agents may be used at the same time. However, when the crosslinking density in the coating layer becomes too high, the coating layer tends to be deteriorated in easy-adhesive property especially to a solvent-free topcoat resin layer. Therefore, it is required that the amount of the crosslinking agent used in the coating layer is controlled so as not to become too large. Whereas, the crosslinking density of the polymer-type crosslinking agent tends to hardly become too high. Therefore, the use of the polymer-type crosslinking agent is preferred because such a crosslinking agent can exhibit stable properties whether the amount of the crosslinking agent used is large or small.

The polyurethane used in the present invention is especially preferably in the form of a resin constituted from a polyol, a polyisocyanate, a chain extender having a reactive hydrogen atom and a compound having a group reactive with an isocyanate group and at least one anionic group.

In the present invention, in order to prevent occurrence of blocking and improve a slip property, particles may be incorporated in the coating layer. In this case, when the content of the particles in the coating layer is too large, the resulting coating layer tends to be deteriorated in transparency and continuity, so that the strength of the coating layer tends to be lowered, and further the easy-adhesive property of the resulting coating layer tends to be deteriorated. More specifically, the content of the particles in the coating layer is suitably not more than 15% by weight and preferably not more than 10% by weight based on the total weight of the coating layer.

Examples of the particles used in the coating layer include inorganic particles such as silica, alumina and metal oxides, and organic particles such as crosslinked polymer particles. In particular, from the viewpoints of a good dispersibility in the coating layer and a good transparency of the resulting coating film, silica particles are preferred.

When the particle diameter of the particles is too small, the effects of preventing occurrence of blocking and improving a slip property tend to be hardly attained. When the particle diameter of the particles is too large, the particles tend to be fallen off from the resulting coating film. The average particle diameter of the particles is preferably about 1/2 to about 10 times the thickness of the coating layer. Further, when the particle diameter of the particles is too large, the resulting coating layer tends to be deteriorated in transparency. The average particle diameter of the particles is preferably not more than 300 nm and more preferably not more than 150 nm. The average particle diameter as described herein may be determined by measuring a 50% average particle diameter, as a number-average particle diameter, of the particles as measured in a dispersion thereof using a microtrack UPA manufactured by Nikkiso Co., Ltd.

The proportion of the above polyurethane resin in the coating layer is not particularly limited. This is because although the coating layer is formed of the polyurethane as a main component, the polyurethane may be merely mixed in the coating layer formed of the other easy-adhesive resin as a main component to enhance an easy-adhesive property of the coating layer. Therefore, the proportion of the polyurethane resin in the coating layer may be appropriately selected and determined from the range capable of attaining the aimed properties. However, when the proportion of the polyurethane resin is too small, the effect of addition of the polyurethane resin tends to be hardly attained. Therefore, the proportion of the polyurethane resin is not less than 10% and preferably not less than 20% to obtain a high effect by addition thereof.

The coating solution for providing the easy-adhesive coating layer may also comprise components other than the above-described components, if required. Examples of the other components include surfactants, other binders, defoaming agents, coatability improvers, thickeners, antioxidants, ultraviolet absorbers, foaming agents, dyes and pigments. These additives may be used alone or in combination of any two or more thereof, if required.

The easy-adhesive coating layer used in the present invention may be obtained by a so-called in-line coating method in which the coating layer is formed during formation of the polyester film, in particular, by a coating/stretching method in which the film is stretched after the coating step.

The in-line coating method means a method in which the coating step is carried out during the process for production of the polyester film, more specifically, such a method in which the coating step is carried out in an optional stage from melt-extrusion of the polyester to taking-up of the film which has been subjected to biaxial stretching and then to thermal fixing. In general, any of the substantially amorphous unstretched sheet obtained by melting and rapidly cooling the polyester, the monoaxially stretched film obtained by stretching the unstretched sheet in a longitudinal direction (length direction) thereof, or the biaxially stretched film before the thermal fixing, may be subjected to the coating step. In particular, as the preferred coating/stretching method, the method of subjecting the monoaxially stretched film to the coating step and then stretching the thus coated film in a lateral direction thereof is more excellent. The above method has merits in view of production costs because formation of the film and coating for forming the coating layer can be performed at the same time. In addition, since the stretching is carried out after completion of the coating, it is possible to form a uniform thin coating layer, resulting in a stable adhesion property of the resulting coating film. Also, the polyester film before being biaxially stretched is first covered with the easy-adhesive resin layer and then the polyester film and the coating layer are stretched at the same time, so that adhesion between the base film and the coating layer can be strengthened. Further, upon the biaxial stretching of the polyester film, the film is stretched in a lateral direction thereof while grasping end portions of the film with the tenter, and therefore constrained in both the longitudinal and lateral directions thereof. This allows the polyester film to be exposed to high temperature while keeping a flatness thereof without formation of wrinkles, etc., when subjected to thermal fixing. Therefore, the temperature used in the heat treatment to be conducted after the coating can be increased up to a high temperature which has not been reached in the other conventional methods, so that the film-forming property of the coating layer can be enhanced, and the adhesion between the coating layer and the polyester film can be strengthened. Upon production of the easy-adhesive polyester film, uniformity of the coating layer, improvement in film-forming property thereof and good adhesive between the coating layer and the film will result in preferable properties of the resulting film in many cases. In particular, in the present invention, when the carboxyl group in the polyurethane resin is reacted with the crosslinking gent, the crosslinking reaction can be promoted owing to a high temperature used in the in-line coating process, so that the resulting coating layer can be improved in durability, anti-blocking property, etc.

However, the vinyl group included in the polyurethane resin used in the present invention tends to be hardly reacted only by the heat treatment, and as a result, remains in the coating layer. The remaining vinyl group is important for the coating layer to exhibit an adhesion property in the subsequent steps. When the active energy radiation-cured resin layer is provided on the coating layer, such a topcoat agent may be formed of a radical polymerizable resin in many cases. The reason why an excellent easy-adhesive property can be attained according to the present invention is suggested such that radicals generated upon curing the resin layer also act on the coating layer of the present invention, so that the vinyl group in the coating layer is chemically bonded to the topcoat agent. However, if a double bond in the coating layer is not the vinyl group and is present in a main chain of the polymer, it is suggested that the reaction of such a double bond with the topcoat agent tends to is extremely hardly caused owing to steric hindrance thereof, so that the effect of the coating layer cannot be exhibited to such a sufficient extent as achieved according to the present invention. However, when a part of hydrogen atoms bonded to the vinyl group is substituted with the other atom or a functional group having a relatively low steric hindrance, a certain degree of the above effect may be attained.

The coating solution used for forming the coating layer in the present invention is preferably in the form of an aqueous solution or a water dispersion from the viewpoints of easiness of handling, suitable working environments and safety. However, the coating solution may comprise an organic solvent as long as a main medium of the coating solution is water and unless addition of the organic solvent adversely affects the aimed effects of the present invention.

As the method of applying the coating solution onto the polyester film, there may be used those coating techniques described, for example, in Yuji HARASAKI, "Coating Methods", Maki-shoten, 1979. Specific examples of the coating techniques include coating methods using an air doctor coater, a blade coater, a rod coater, a knife coater, a squeeze coater, an impregnation coater, a reverse roll coater, a transfer roll coater, a gravure coater, a kiss roll coater, a cast coater, a spray coater, a curtain coater, a calendar coater, an extrusion coater, a bar coater, etc.

Meanwhile, in order to improve a coatability and an adhesion property of the coating agent to the film, the film before being coated therewith may be subjected to chemical treatments, corona discharge treatments or plasma treatments, etc.

The coating amount of the coating layer provided on the polyester film as a finally obtained coating film is usually 0.002 to 1.0 g/m², preferably 0.005 to 0.5 g/m² and more preferably 0.01 to 0.2 g/m². When the coating amount of the coating layer is less than 0.002 g/m², the resulting coating layer tends to hardly exhibit a sufficient adhesion property. When the coating amount of the coating layer is more than 1.0 g/m², the resulting coating layer tends to suffer from deterioration in appearance and transparency, and the resulting film tends to undergo occurrence of blocking and increase in production costs.

### EXAMPLES

The present invention is described in more detail below by Examples. However, these Examples are only illustrative and not intended to limit the present invention thereto, and the variations and other modifications are possible without departing from the scope of the present invention. Meanwhile, the methods for evaluating various properties used in Examples and Comparative Examples are as follows.

### (1) Initial adhesion property:

The active energy radiation-curing resin composition shown below was dropped on a glass plate, and then the polyester film was overlapped thereon such that the active energy radiation-curing resin composition applied faced to the coating layer in the polyester film. The resulting laminate on the glass plate was uniformly rolled under a load of 4 kg using a roller having a width of 50 mm such that a coating film obtained after being cured had a thickness of 15 µm. Next, the thus obtained laminate was irradiated with light from the film side for about 5 sec at an irradiation distance of 120 mm using a high-pressure mercury lamp having an irradiation energy of 160 W/cm to cure the composition, and then the cured film was peeled off from the glass plate, thereby obtaining a laminated film having a structure of polyester film/easy-adhesive coating layer/active energy radiation-cured resin layer. The active energy radiation-cured resin layer of the resulting laminated film was cut at the intervals of 1 inch in width to form 100 cross-cuts thereon, and immediately subjected to a rapid peel test using a cellotape (registered trademark) three times at the same position of the film to evaluate adhesion between the layers by an area of the film from which the cross-cuts of the cured resin layer were peeled off. The evaluation criteria are as follows.
A: Number of cross-cuts peeled = 0
B: 1 ≤ number of cross-cuts peeled ≤ 10
C: 11 ≤ number of cross-cuts peeled s 20
D: 21 < number of cross-cuts peeled
E: Whole cross-cuts were peeled off.
·Curing resin composition: composition comprising 100 parts of 1,9-nonanediol diacrylate and 4 parts of "IRGACURE 184" produced by Ciba Specialty Chemicals Corp.

### (2) Durable adhesion property:

The laminated film comprising the cured resin composition which was obtained in the above evaluation of initial adhesion property, was allowed to stand in a thermo-hygrostat under the environmental conditions of 65°C and 90% RH for 1000 hr, and then subjected to cross-cut adhesion test in the same manner as described above.

A: Number of cross-cuts peeled = 0
B: 1 ≤ number of cross-cuts peeled ≤ 10
C: 11 ≤ number of cross-cuts peeled ≤ 20
D: 21 < number of cross-cuts peeled
E: Whole cross-cuts were peeled off.

The polyester raw materials used in Examples and Comparative Examples are as follows.
(Polyester 1): Polyethylene terephthalate comprising substantially no particles and having an intrinsic viscosity of 0.66.
(Polyester 2): Polyethylene terephthalate comprising 0.6 part by weight of amorphous silica having an average particle diameter of 2.5 µm, and having an intrinsic viscosity of 0.66.

Also, the following coating compositions were used. The resins were synthesized by ordinary methods, and dispersed in water, if required. In the followings, the term "part(s)" means "part(s) by weight" in terms of solid resin components.
(U1): Water dispersion of a vinyl group-containing polyurethane resin which is obtained by neutralizing a prepolymer comprising 380 parts of a polycarbonate polyol produced from 1,6-hexanediol and diethyl carbonate which has a number-average molecular weight of 2000, 5.3 parts of a vinyl ether-containing polyol produced from a partially methoxylated trimethylol propane and 2-hydroxyethyl vinyl ether, 10.4 parts of neopentyl glycol, 58.4 parts of isophorone diisocyanate and 74.3 parts of dimethylolbutanoic acid with triethylamine, and then subjecting the neutralized product to chain extension reaction using isophorone diamine.

(U2): Vinyl group-containing polycarbonate polyurethane resin of a carboxylic acid-water dispersed type "SPX-039" (produced by Adeka Corp.)
(U3): Water dispersion of a vinyl group-containing polyurethane resin which is obtained by neutralizing a prepolymer comprising 400 parts of a polyester polyol produced from 3-methyl-1,5-pentanediol and adipic acid which has a number-average molecular weight of 3000, 8.7 parts of a vinyl ether-containing polyol produced from a partially methoxylated trimethylol propane and 2-hydroxyethyl vinyl ether, 41.7 parts of neopentyl glycol, 133 parts of isophorone diisocyanate and 29.7 parts of dimethylolbutanoic acid with triethylamine, and then subjecting the neutralized product to chain extension reaction using isophorone diamine.
(U4): Polycarbonate polyurethane resin of a carboxylic acid water-dispersed type "TAKELAC W-511" (produced by Mitsui Chemical Polyurethane, Co., Ltd.)
(U5): Polyester polyurethane resin of a carboxylic acid water-dispersed type "HYDRAN AP-40" (produced by DIC Corp.)
(U6): Water dispersion of a polyurethane resin comprising 350 parts of maleic anhydride-1,6-hexanediol, 150 parts of polyethylene glycol, 166 parts of 2,4-toluene diisocyanate and 15 parts of dimethylolpropionic acid, having an unsaturated double bond in a main chain thereof which is obtained by neutralization with triethylamine.

(F1): Water dispersion of silica sol having an average particle diameter of 0.07 µm.
(C1): Polymer-type crosslinking agent "EPOCROSS WS-500" (produced by Nippon Shokubai Co., Ltd.) in which an oxazoline group is bonded as a branched chain to an acrylic resin.
(C2): Methoxymethylol melamine "BECKAMINE J-101" (produced by DIC Corp.).
(C3): Polyglycerol polyglycidyl ether "DECONAL EX-521" (produced by Nagase Chemtex Co., Ltd.).

### Example 1:

The polyester 1 and the polyester 2 were blended with each other at a weight ratio of 95/5, and the resulting mixture was fully dried and then heated and melted at a temperature of 280 to 300°C. The molten resin was extruded through a T-shaped die into a sheet shape, and allowed to closely contact with a mirror surface of a cooling drum maintained at a temperature of 40 to 50°C by an electrostatic adhesion method to cool and solidify the resin, thereby forming an unstretched polyethylene terephthalate film. The thus obtained film was stretched at a stretch ratio of 3.7 times in a longitudinal direction thereof while passing the film through a group of heating rolls maintained at 85°C, thereby obtaining a monoaxially oriented film. Then, a coating composition as shown in Table 1 was applied onto one surface of the thus obtained monoaxially oriented film. Next, the resulting coated film was introduced into a tenter type stretching machine, and stretched therein at a stretch ratio of 4.0 times in a width direction thereof while drying the coating composition by using a heat generated therefrom, and further subjected to heat treatment at 230°C, thereby obtaining a coated film comprising a 100 µm-thick biaxially oriented polyethylene terephthalate film and a coating layer formed on the film in a coating amount of 0.04 g/m². The properties of the thus obtained film are shown in Table 2.

### Examples 2 to 12 and Comparative Examples 1 to 5:

The same procedure as defined in Example 1 was conducted except that the coating solution was changed to those shown in Table 1, thereby obtaining coated films each comprising a 100 µm-thick base film and a coating layer formed on the film in such a coating amount as shown in Table 1. The properties of the thus obtained films are shown in Table 2.

**Table 1**

| Examples and Comparative Examples | Components | Weight ratio of solid components | Coating amount (g/m²) |
|---|---|---|---|
| Example 1 | U1/C1/F1 | 60/30/6 | 0.04 |
| Example 2 | U2/C1/F1 | 60/30/6 | 0.04 |
| Example 3 | U3/C1/F1 | 60/30/3 | 0.04 |
| Example 4 | U1/C1/F1 | 60/15/6 | 0.04 |
| Example 5 | U2/C1/F1 | 60/15/6 | 0.04 |
| Example 6 | U1/F1 | 60/6 | 0.04 |
| Example 7 | U2/C1/C2/F1 | 60/15/15/6 | 0.04 |
| Example 8 | U2/C1/C3/F1 | 60/10/10/6 | 0.02 |
| Example 9 | U2/F1 | 60/6 | 0.04 |
| Example 10 | U3/F1 | 60/6 | 0.04 |
| Example 11 | U1/C1/F1 | 60/15/6 | 0.09 |
| Example 12 | U2/U4//C1/F1 | 30/30/30/6 | 0.04 |
| Comparative Example 1 | U4/C1/F1 | 60/30/6 | 0.04 |
| Comparative Example 2 | U5/C1/F1 | 60/30/6 | 0.04 |
| Comparative Example 3 | U6/C1/F1 | 60/30/6 | 0.04 |
| Comparative Example 4 | U4/F1 | 60/6 | 0.04 |
| Comparative Example 5 | U5/F1 | 60/6 | 0.04 |

### Example 13:

The same procedure as defined in Example 1 was conducted except that no coating layer was formed, thereby obtaining a biaxially oriented polyethylene terephthalate film. Next, a coating solution having the same compositional ratio as that used in Example 1 was applied onto the thus obtained film such that a coating amount thereof was 0.04 g/m² after dried, in an off-line manner by a bar coating method, and then subjected to heat treatment at a dryer set temperature of 180°C for 5 sec, thereby obtaining a coated film. The properties of the thus obtained film are shown in Table 2. However, it was confirmed that the thus obtained coated film suffered from wrinkles owing to shrinkage of the film within the dryer and, therefore, was deteriorated in surface flatness as compared to those obtained in the other Examples. The other properties of the thus obtained film are shown in Table 2.

**Table 2**

| Examples and Comparative Examples | Initial adhesion property | Durable adhesion property |
|---|---|---|
| Example 1 | A | A |
| Example 2 | A | A |
| Example 3 | B | B |
| Example 4 | A | C |
| Example 5 | A | B |
| Example 6 | A | D |
| Example 7 | B | B |
| Example 8 | A | B |
| Example 9 | A | D |
| Example 10 | B | D |
| Example 11 | A | B |
| Example 12 | A | B |
| Example 13 | A | B |
| Comparative Example 1 | C | D |
| Comparative Example 2 | E | E |
| Comparative Example 3 | D | D |
| Comparative Example 4 | C | E |
| Comparative Example 5 | E | E |

### INDUSTRIAL APPLICABILITY

The film of the present invention can be suitably used as a biaxially stretched polyester film in the applications requiring an excellent adhesion property. In particular, the film of the present invention is more suitably used as those bonded to a solvent-free active radiation-curing resin.

## Claims

1. An easy-adhesive film comprising a coating layer obtained by applying a coating solution comprising a vinyl group-containing polyurethane resin.
